**Europäisches Patentamt**

(19) **European Patent Office**

**Office européen des brevets**

(11) Veröffentlichungsnummer: **0 093 328**
**B1**

(12) **EUROPÄISCHE PATENTSCHRIFT**

(45) Veröffentlichungstag der Patentschrift:
13.08.86

(51) Int. Cl.⁴: **F 16 L 41/06,** F 16 L 47/00

(21) Anmeldenummer: **83103859.1**

(22) Anmeldetag: **20.04.83**

(54) **Anschluss-Formstück.**

(30) Priorität: **29.04.82 CH 2638/82**

(43) Veröffentlichungstag der Anmeldung:
**09.11.83 Patentblatt 83/45**

(45) Bekanntmachung des Hinweises auf die Patenterteilung:
**13.08.86 Patentblatt 86/33**

(84) Benannte Vertragsstaaten:
**AT BE DE FR GB IT LU NL SE**

(56) Entgegenhaltungen:
**EP-A-0 076 460**
**DE-A-2 035 667**
**DE-A-2 514 827**
**DE-B-1 650 055**
**DE-U-1 716 598**
**US-A-1 570 887**
**US-A-2 309 253**

(73) Patentinhaber: **GEORG FISCHER AKTIENGESELLSCHAFT, Mühlentalstrasse 105, CH- 8201 Schaffhausen (CH)**

(72) Erfinder: **Thalmann, Alfred, Brunngasse 71, CH- 8448 Uhwiesen (CH)**
Erfinder: **Reich, Fritz, Schulstrasse, CH- 8448 Uhwiesen (CH)**

EP 0 093 328 B1

## Beschreibung

Die Erfindung betrifft ein Anschlussformstück zur Erstellung eines Abzweiganschlusses wie es im Oberbegriff von Anspruch 1 gekennzeichnet ist.

Für den Anschluss von Zweigleitungen kleineren Durchmessers an bestehenden Hauptrohrleitungen ist es bekannt, auf die Hauptrohrleitung Formstücke - sogenannte Anbohrformstücke aufzusetzen und durch Anbohren der Hauptleitung die Verbindung mit der am Formstück angeschlossenen Zweigleitung herzustellen. Derartige Anbohrformstücke sind meist zweiteilig ausgebildet, wobei deren beide Sattelhälften z.B. durch Keile zusammengehalten (CH-A-464 260 bzw. DE-A-2 035 667) oder bei Kunststoffleitungen durch eine Schweissverbindung mit der Hauptrohrleitung verbunden werden (CH-A-528 697 bzw. DE-A-2 514 827).

Bei allen bekannten Anbohrformstücken ist der Anschlussstutzen für die Zweigleitung an dem für die Anbohrwerkzeuge vorgesehenen, radial zur Hauptrohrleitung verlaufenden Stutzen angeordnet. Eine derartige Anordnung ermöglicht bei einer kompakten Bauweise jedoch nur den Anschluss von Zweigleitungen, deren Querschnitt bzw. Durchmesser wesentlich kleiner ist als der der Hauptrohrleitung.

Abzweigleitungen mit einem mindestens gleich grossen oder geringfügig kleinerem Durchmesser wie die Hauptrohrleitung können zwar mit handelsüblichen T-Formstücken hergestellt werden, doch ist dies aufwendig und dann nicht möglich, wenn die Abzweigung unter Aufrechterhaltung des Betriebsdruckes des durchgeleiteten Mediums erstellt werden soll. In diesem Zusammenhang ist ein Anschlussformstück bekanntgeworden (DE-U-1 716 598), welches einen Ringkanal zum Weiterleiten des Druckmediums aufweist.

Aufgabe der vorliegenden Erfindung ist die Schaffung eines Anschluss-Formstückes der eingangs genannten Art, mittels welchem auch während des Medium-Durchflusses unter Betriebsdruck eine Zweigleitung an eine Rohrleitung anschliessbar ist, deren Durchmesser auch gleich gross oder etwas kleiner sein kann wie der der Rohrleitung ist.

Ausserdem soll das Formstück einfach bzw. kunststoffgerecht gestaltbar und absolut dicht mit der Rohrleitung verbindbar sein.

Erfindungsgemäss wird dies durch die im kennzeichnenden Teil des Anspruches 1 angeführten Merkmale gelöst.

Weitere vorteilhafte Ausgestaltungen der Erfindung sind in den abhängigen Ansprüchen gekennzeichnet.

Durch die erfindungsgemässe Anordnung des Anschlußstutzens für die Abzweigleitung auf der dem Werkzeug gegenüberliegenden Rohrumfangsseite und die Verbindung der beiden Stutzen mit einem Ringkanal ist es möglich auch bei Rohrleitungen im grossen Durchmesserbereich Abzweigleitungen anzuschliessen, welche gleiche oder annähernd gleiche Durchmesser aufweisen wie die Rohrleitung selbst, wobei ein Anschliessen der Abzweigleitung auch bei einer unter Druck stehenden Rohrleitung gewährleistet ist.

Das für die Erzeugung des entsprechend grossen Loches erforderliche Werkzeug benötigt dadurch nur einen kurzen Verstell-Weg, wodurch der Stutzen für das Werkzeug trotz dessen grossen Durchmessers kurz ausgebildet sein kann. Daraus ergeben sich die Vorteile einer einfachen, materialsparenden Formgestaltung bei einer geringen Bauhöhe, welche insbesonders für die Herstellung des Anschlussformstückes aus Kunststoff im Spritzgussverfahren geeignet ist.

Durch die vorteilhafte Ausbildung des Formteiles mit zwei Sattelstücken gemäss Anspruch 2 wird eine einfache Montage erreicht, wobei eine lösbare als auch eine nicht lösbare Verbindung möglich ist. Durch die Befestigung der Sattelstücke an der Rohrleitung gemäss Anspruch 3 mittels einer Schweissverbindung wird eine besonders dichte und feste Verbindung erreicht. Die Merkmale der Ansprüche 3 bis 5 für sich allein sind durch die Ältere Anmeldung EP-A-0 076 460 vorweggenommen. Ferner weisen die am Gegenstand dieser älteren Anmeldung angeordneten beiden Sattelstücke jeweils zwei umfangsseitig angeordnete Auflageflächen auf, die zusammen mit dem Außendurchmesser des Rohres und den Schenkeln der Heizmatten einen Ringkanal bilden. Mindestens eines der Sattelstücke ist als Abzweigstück für ein Abzweigrohr oder alternativ hierzu, als Anbohrformstück ausgebildet.

Die Erfindung ist in beiliegenden Zeichnungen anhand eines Ausführungsbeispieles dargestellt und nachfolgend beschrieben.

Es zeigen:

Fig. 1 einen Querschnitt eines mit einer Rohrleitung verschweissten Anschlussformstückes,

Fig. 2 einen Schnitt entlang der Linie II-II von Fig. 1 und

Fig. 3 eine Draufsicht der Heizmatte im flachgelegten Zustand.

Auf eine Rohrleitung 1 aus Kunststoff ist ein Anschlussformstück 2 angeordnet, welches zwei Sattelstücke 3 und 4 aufweist. Die beiden Sattelstücke 3 und 4 sind mit der Rohrleitung 1 und auch gegenseitig mittels zwei, vorzugsweise identischen Heizmatten 5a, 5b verschweisst, von denen jede einem der Sattelstücke 3 oder 4 zugeordnet ist.

Die halbschalenförmig ausgebildeten Sattelstücke 3, 4 sind an ihren seitlichen Enden mit je einem Flansch 6a, 6b versehen, wobei die sich jeweils gegenüberliegenden Flansche 6a, 6b einen in Längsrichtung der Rohrleitung 1 verlaufenden Spalt 7 bilden, welcher vorzugsweise tangential oder annähernd tangential zum Aussendurchmesser der Rohrleitung 1 angeordnet ist.

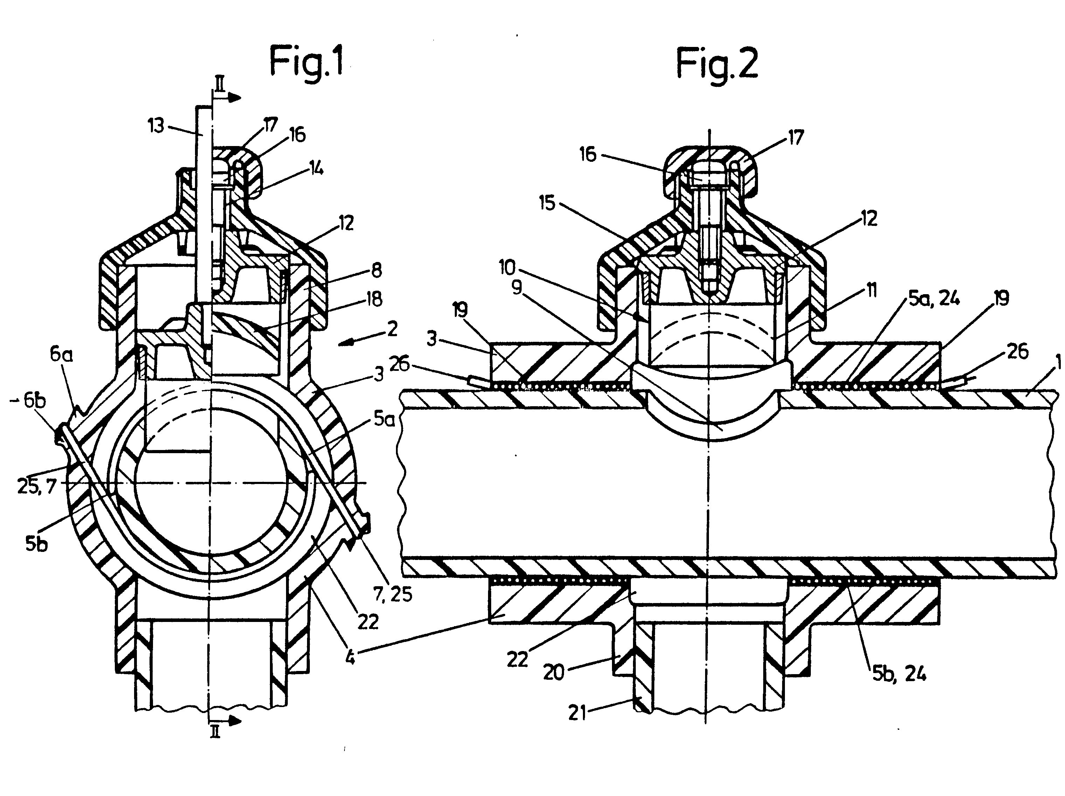

Das Sattelstück 3 weist einen Stutzen 8 auf, in welchem ein Werkzeug 10 zur Erzeugung eines Loches 9 in der Rohrleitung 1 angeordnet ist. Im gezeigten Ausführungsbeispiel ist das Werkzeug als Loch-Stanz-Werkzeug 10 ausgebildet welches aus einem Schneideteil 11 und einem Führungsteil 12 besteht. In der linken Bildhälfte von Fig. 1 ist das Werkzeug 10 in der untersten Schneid-Lage dargestellt, wobei in das Führungsteil 12 eine Stange 13 eingeschraubt ist, welche in einen Durchgangsloch 14 eines mit dem Stutzen 8 fest verbundenen Deckelteiles 15 geführt ist. Das Loch 9 wird durch einen Druck oder Schlag auf das äussere Ende der Stange 13 mittels eines Schlagwerkzeuges wie z.B. einem Hammer erzeugt.

In der rechten Bildhälfte von Fig. 1 ist das werkzeug 10 nach der Locherzeugung in der oberen Ruhelage dargestellt.

Hierbei ist anstatt der Stange 13 eine Schraube 16 in das Führungsteil 12 eingeschraubt, durch welche das Werkzeug 10 am Deckelteil 15 fest gehalten wird, wobei das Durchgangsloch 14 durch eine Abdeckkappe 17 dicht verschlossen ist.

Das ausgestanzte Rohrteil 18 der Rohrleitung 1 wird durch das Werkzeug 10 mit angehoben und bleibt durch den Druck des Mediums in dieser Lage.

Das Werkzeug kann auch als Fräs- oder Bohrwerkzeug ausgebildet sein, wobei dann z.B. die Stange 13 und das Durchgangsloch 14 ein Vorschubgewinde zur Erzeugung der Vorschubbewegung beim Drehen des Werkzeuges aufweisen, oder es sind getrennte Bohreinrichtungen auf den Stutzen aufsetzbar.

Das Sattelstück 4 weist einen Anschlußstutzen 20 auf an welchem eine Abzweigleitung 21 durch eine nicht lösbare Verbindung z.B. eine Schweiss- oder Klebe-Verbindung oder durch eine lösbare Verbindung anschliessbar ist.

Der Abzweigstutzen 21 ist somit auf der dem Stutzen 8 für das Werkzeug 10 gegenüberliegenden halben Rohrumfang radial zur Rohrleitung 1 angeordnet, wobei vorteilhafterweise beide Stutzen 8, 20 zueinander fluchtend angeordnet sind. Am Innendurchmesser der Sattelstücke 3, 4 sind zwischen zwei für die Verschweissung erforderlichen Auflageflächen 19 Ausnehmungen angeordnet, welche zusammen einen die beiden Stutzen 8 und 20 verbindenden Ringkanal 22 bilden.

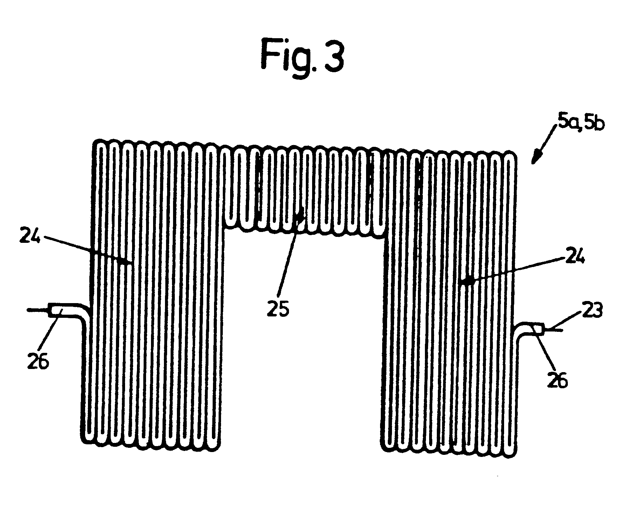

Die Fig. 3 zeigt eine flachgelegte Heizmatte 5a bzw. 5b, welche aus einer zick-zack-förmigen Anordnung eines mit Kunststoff ummantelten Heizdrahtes 23 besteht.

Der Heizdraht 23 ist so gewickelt, dass die Heizmatte U-förmig mit zwei Schenkeln 24 und einem Steg 25 ausgebildet ist. Die beiden abstehenden Enden 26 des Heizdrahtes jeder Heizmatte stehen im fertig montierten Zustand unter den Sattelstücken hervor oder werden auf ein Steckelement geführt. Mittels Klemm- oder Steckverbindungen wird die Wicklung an eine Stromquelle angeschlossen (siehe auch Fig. 2).

Jede Heizmatte 5a, 5b wird so zwischen der Rohrleitung 1 und den Sattelstücken 3, 4 eingelegt, dass jeweils die beiden Schenkel 24 zwischen dem Aussendurchmesser der Rohrleitung 1 und den Auflageflächen 19 der Sattelstücke 3, 4 und der Steg 25 jeweils in einem der Spalte 7 zu liegen kommt. Die beiden Schenkel 24 umschliessen somit die Rohrleitung 1 am vollen Umfang wobei das Ende des Schenkels 24 einer Heizmatte 5a bzw. 5b mit dem im Spalt 7 angeordneten Steg 25 der anderen Heizmatte 5b bzw. 5a eine gegenseitige Ueberdeckung bildet. Dies ergibt zwei vollständige Umfangsschweissverbindungen zwischen der Rohrleitung und den Sattelstücken im Bereich der Auflageflächen und zwei durchgehende Längsschweissverbindungen zwischen den beiden Sattelstücken 3, 4 in den Spalten 7, so dass der Ringkanal 22 nach aussen vollkommen abgedichtet ist.

Nach dem Erstellen der Schweissverbindung der beiden Sattelstücke mit der Rohrleitung mittels durch die Heizmatten geleiteten Strom wird an den Anschlußstutzen 20 die Abzweigleitung 21 angeschlossen und anschliessend durch das Werkzeug 10 durch Ausstanzen oder Ausbohren des Loches 9 die Verbindung zwischen Rohrleitung 1 und der Abzweigleitung 21 hergestellt, wobei das Medium durch das Loch 9 und den Ringkanal 22 zur Abzweigleitung 21 gelangt. Die Abdichtung zwischen dem Führungsteil 12 und dem Stutzen 8 ermöglicht die Erstellung des Loches auch unter Druck des Durchflussmediums. Nach der Herstellung des Loches 9 wird das Werkzeug mittels der Schraube 16 befestigt und das Durchgangsloch 14 mit der Abdeckkappe 17 vollkommen dicht verschlossen.

Neben der beschriebenen Schweissverbindung können die Sattelstücke auch z.B. mittels einer Klebeverbindung oder einer lösbaren Verbindung z.B. durch gegenseitiges Verspannen mittels Schrauben oder Keilen mit der Rohrleitung verbunden werden, wobei durch Anordnung von Dichtungen beidseitig der Ringkammer umfangsmässig und in den Trennfugen der Sattelstücke längs der Rohrleitung eine einwandfreie Abdichtung gewährleistet sein muss. Das Anschlussformstück kann auch einstückig mit einem Aufklapp-Scharnier zum radikalen Aufstecken auf die Rohrleitung ausgebildet sein.

## Patentansprüche

1. Anschluss-Formstück zur Erstellung eines Abzweig-Anschlusses insbesondere bei Kunststoff-Rohrleitungen mit mindestens einem, in einem Stutzen angeordneten, mindestens ein Loch erzeugenden Werkzeug und einem Anschlußstutzen für die Abzweigleitung, dadurch gekennzeichnet, dass der Anschlußstutzen (20) auf der dem Stutzen (8) für das Werkzeug (10) gegenüberliegenden Seite des Formstückes angeordnet ist und beide Stutzen (8, 20), mittels eines Ringkanals (22) miteinander verbunden sind.

2. Formstück nach Anspruch 1, dadurch gekennzeichnet, dass es zwei Sattelstücke (3, 4) aufweist, wobei der Stutzen (8) für das Werkzeug (10) an einem (3) und der Abzweigstutzen (20) am anderen Sattelstück (4) angeordnet sind.

3. Formstück nach Anspruch 2, dadurch gekennzeichnet, dass die beiden Sattelstücke (3, 4) mittels einer Schweissverbindung mit der Rohrleitung (1) verbindbar sind.

4. Formstück nach Anspruch 3, dadurch gekennzeichnet, dass die beiden Sattelstücke (3, 4) zwei nahezu tangential oder tangential zum Aussendurchmesser der Rohrleitung (1) verlaufende Längs-Spalte (7) bilden und dass jedem Sattelstück (3, 4) eine Heizmatte (5a, 5b) zugeordnet ist, wobei das eine Ende jeder Heizmatte (5a, 5b) in jeweils einem der Spalte (7) angeordnet ist und beide Heizmatten zusammen sich gegenseitig überlappend die Rohrleitung (1) umfangsmässig ganz umfassen.

5. Formstück nach Anspruch 4, dadurch gekennzeichnet, dass jede Heizmatte (5a, 5b) U-förmig ausgebildet ist, wobei deren Schenkel (24) am Rohrumfang verlaufend und der Verbindungssteg (25) in jeweils einem der Längs-Spalte (7) angeordnet sind.

6. Formstück nach einem der Ansprüche 1 bis 5, dadurch gekennzeichnet, dass das Werkzeug (10) als mit einem Vorschubgewinde versehenen Bohr- oder Fräswerkzeug ausgebildet ist.

7. Formstück nach einem der Ansprüche 1 bis 5, dadurch gekennzeichnet, dass das Werkzeug (10) als mit einem Schlag- bzw. Druckwerkzeug betätigbares Loch-Stanz-Werkzeug (10) ausgebildet ist.

## Claims

1. Moulded connection piece for producing a branch connection, in particular in the case of plastics piping, having at least one tool arranged in a connecting piece and producing at least one aperture, and a connecting branch for the branch line, characterised in that the connecting branch (20) is arranged on the side of the moulded part opposite the connecting piece (8) for the tool (10), and both connecting pieces (8, 20) are connected by means of an annular channel (22).

2. Moulded piece according to claim 1, characterised in that it has two saddle pieces (3, 4) wherein the connecting piece (8) for the tool (10) is arranged on one saddle piece (3), and the branch connecting piece (20) is arranged on the other saddle piece (4).

3. Moulded piece according to claim 2, characterised in that the two saddle pieces (3, 4) can be joined to the pipe (1) by means of a welded joint.

4. Moulded piece according to claim 3, characterised in that the two saddle pieces (3, 4) form two longitudinal gaps (7) running almost tangentially or tangentially to the outer diameter of the pipe (1), and in that a heating mat (5a, 5b) is associated with each saddle piece (3, 4), wherein one end of each heating mat (5a, 5b) is arranged in respectively one of the gaps (7), and both heating mats completely enclose the pipe (1) circumferentially in mutually overlapping fashion.

5. Moulded piece according to claim 4, characterised in that each heating mat (5a, 5b) is made to be U-shaped, wherein its limb (24) extending along the pipe circumference, and the connecting crosspiece (25), are arranged in respectively one of the longitudinal gaps (7).

6. Moulded piece according to one of claims 1 to 5, characterised in that the tool (10) is constructed as a boring- or milling tool provided with a feed thread.

7. Moulded piece according to one of claims 1 to 5, characterised in that the tool (10) is constructed as a hole punching tool (10) actuatable with a striking or pressing tool.

## Revendications

1. Collier de dérivation pour l'établissement d'un raccordement d'embranchement sur des conduites en matière plastique en particulier, avec au moins un outil logé dans une tubulure et produisant au moins un trou, et une tubulure de raccordement de la canalisation de dérivation, ledit collier étant caractérisé en ce que la tubulure d'embranchement (20) est disposée sur le côté du collier opposé à la tubulure (8) de l'outil (10) et les deux tubulures (8, 20) sont reliées par un canal annulaire (22).

2. Collier selon revendication 1, caractérisé en ce qu'il comporte deux selles (3, 4), la tubulure (8) de l'outil (10) étant disposée sur une selle (3) et la tubulure de dérivation (20) sur la seconde selle (4).

3. Collier selon revendication 2, caractérisé en ce que les deux selles (3, 4) sont reliées par soudage à la conduite (1).

4. Collier selon revendication 3, caractérisé en ce que les deux selles (3, 4) définissent des interstices longitudinaux (7) tangents ou sensiblement tangents au diamètre extérieur de la conduite (1); et un mat chauffant (5a, 5b) est affecté à chaque selle (3, 4), une extrémité de chaque mat chauffant (5a, 5b) étant disposée dans un des interstices (7) et les deux mats chauffants entourant totalement la conduite (1) avec recouvrement mutuel.

5. Collier selon revendication 4, caractérisé en ce que chaque mat chauffant (5a, 5b) est réalisé en U dont les branches (24) sont disposées sur la circonférence de la conduite et l'âme de liaison (25) est disposée dans un des interstices longitudinaux (7).

6. Collier selon une quelconque des revendications 1 à 5, caractérisé en ce que l'outil (10) est réalisé sous forme d'un outil de perçage ou de fraisage comportant un filetage d'avance.

7. Collier selon une quelconque des revendications 1 à 5, caractérisé en ce que l'outil (10) est réalisé sous forme d'un outil de découpage (10) actionné par un outil de choc ou de pression.

Fig.1

Fig.2

0 093 328

# Fig. 3